# EUROPÄISCHE PATENTANMELDUNG

(11) **EP 1 862 714 A2**
(43) Veröffentlichungstag der Anmeldung: **05.12.2007**
(21) Anmeldenummer: 07106092.5
(22) Anmeldetag: 13.04.2007
(51) Int. Cl.: F16L 3/12

(54) **Halterung für eine Rohrleitung**

(30) Priorität: 30.05.2006 DE 102006024992
(71) Anmelder: ContiTech Techno-Chemie GmbH, 61184 Karben (DE)
(72) Erfinder: Schäfer, Frank, 63679 Schotten (DE); Spreitzer, Volker, 65479 Raunheim (DE)
(74) Vertreter: Finger, Karsten

(57) **Zusammenfassung**

Die Erfindung betrifft eine Halterung (3) für eine Rohrleitung (1), die drehfest und axial unverschiebbar auf der Rohrleitung (1) angeordnet ist. Sie soll diese Fixierung auch gegen nicht abgewinkelte Rohrleitungen ohne Schweißen oder Löten ermöglichen. Diese Aufgabe wird dadurch gelöst, dass die Halterung (3) mindestens eine der Querschnittsform der Rohrleitung (1) angepasste Bohrung (4) aufweist, die Rohrleitung (1) durch die Bohrung (4) der Halterung (3) hindurch verläuft und der Durchmesser der Bohrung (4) durch eine plastische Verformung der Halterung (3) derartig reduziert ist, dass die Rohrleitung (1) unlösbar, drehfest und axial unverschiebbar in der Bohrung (4) der Halterung (3) fixiert ist.

## Beschreibung

Die Erfindung betrifft eine Halterung für eine Rohrleitung, die drehfest und axial unverschiebbar auf der Rohrleitung angeordnet ist.

Eine aus der DE 38 38 822 C2, der DE 40 13 162 C2 oder DE 41 34 385 C2 bekannte derartige Halterung benötigt zur Fixierung eine abgewinkelte Rohrleitung, da ansonsten weder die Drehfestigkeit noch die axiale Fixierung gegeben sind. In der DE 10 2004 011 184 A1 ist eine Halterung offenbart, die durch einen lösbaren Klappmechanismus um eine Leitung oder mehrere Leitungen greift und in der DE 79 17 530 U1 ist die Halterung an das Rohr angeschweißt. Häufig werden auch Schraubverbindungen verwendet.

In vielen Anwendungsfällen ist jedoch eine Abwinkelung der Rohrleitung nicht vorgesehen, ein lösbarer Verschluss der Halterung unerwünscht oder eine Schweißung oder Lötung aufgrund der zu verwendenden Materialien nicht möglich.

Der Erfindung liegt die Aufgabe zugrunde, eine Halterung der eingangs geschilderten Art zu schaffen, die eine unlösbare, drehfeste und axial unverschiebbare Fixierung der Halterung auch gegen nicht abgewinkelte Rohrleitungen ohne Schweißen oder Löten ermöglicht.

Diese Aufgabe wird dadurch gelöst, dass die Halterung mindestens eine der Querschnittsform der Rohrleitung angepasste Bohrung aufweist, die Rohrleitung durch die Bohrung der Halterung hindurch verläuft und der Durchmesser der Bohrung durch eine plastische Verformung der Halterung derartig reduziert ist, dass die Rohrleitung unlösbar, drehfest und axial unverschiebbar in der Bohrung der Halterung fixiert ist.

Eine derartige Anordnung hat den Vorteil, dass keine Schraub- oder Clipverbindungen erforderlich sind und eine vibrationsfeste, unlösbare Fixierung der Halterung auf der Rohrleitung gewährleistet ist. Dabei ist eine nahezu beliebige Werkstoffkombination von Halterung und Rohrleitung möglich, da eine stoffschlüssige, thermische Verbindung nicht erfolgt und daher die Schweiß- oder Löteignung der Werkstoffe unbeachtet bleiben kann. Auch die Verwendung von oberflächenbeschichteten Materialien ist so möglich.

In einer Weiterbildung der Erfindung ist die plastische Verformung mindestens eine um die Bohrung der Halterung angeordnete, durch auf die Halterung einwirkenden axialen Druck spanlos erzeugte Ringnut gebildet.

Weil die mindestens eine Ringnut spanlos erzeugt ist, muss sich das verdrängte Material anderweitig in der Halterung verteilen. Der axiale Druck auf die Halterung verhindert dabei, dass sich lediglich eine Materialverdickung einstellt. Das Material fließt also in die Bohrung der Halterung, da hier der Fließwiderstand am geringsten ist. Durch die dabei entstehende Durchmesserverringerung der Bohrung wirkt ein radialer Druck von der Halterung auf die Rohrleitung, wodurch eine kraftschlüssige Verbindung zwischen Halterung und Rohrleitung gegeben ist.

In einer weiteren Ausführungsform der Erfindung ist die plastische Verformung durch zwei jeweils auf axial gegenüberliegenden Seiten der Halterung um die Bohrung der Halterung herum angeordnete, spanlos erzeugte Ringnuten mit unterschiedlichen Durchmessern gebildet.

Durch zwei derartig gegenüber liegende Ringnuten lässt sich ein gleichmäßigerer Werkstofffluss in der Halterung erzielen. Die unterschiedlichen Durchmesser verbessern dabei einerseits den Materialfluss in Richtung auf die Öffnung der Halterung, andererseits ist es dadurch möglich, die zur Aufbringung des axialen Druckes notwendigen Werkzeuge verschiedenen Durchmessern der Rohrleitungen anzupassen.

In einer weiteren Ausführungsform der Erfindung weist die eine Ringnut oder weisen beide Ringnuten im Längsschnitt ein Keilform auf.

Die Keilform der Nut oder der Nuten fördert den Materialfluss in der Halterung während des axialen Druckes in Richtung auf die Bohrung. Dadurch ist eine besonders schnelle und sichere Verbindung zwischen Halterung und Rohrleitung erzeugbar.

In einer weiteren Ausführungsform der Erfindung weist die innere Oberfläche der Bohrung der Halterung eine Verzahnung auf.

Durch eine Verzahnung lässt sich die kraftschlüssige Verbindung zwischen Halterung und Rohrleitung um einen formschlüssigen Anteil ergänzen. Damit ist eine noch bessere Sicherheit der Verbindung gegen Verdrehung oder axiale Verschiebung gegeben.

Anhand der Zeichnung wird nachstehend ein Beispiel der Erfindung näher erläutert. Es zeigt:
- Fig. 1: einen Längsschnitt durch einen Rohrleitungsabschnitt mit einer aufgeschobenen noch frei dreh- und verschiebbaren Halterung und
- Fig. 2: den Rohrleitungsabschnitt mit plastisch verformter, auf dem Rohrleitungsabschnitt fixierter Halterung.

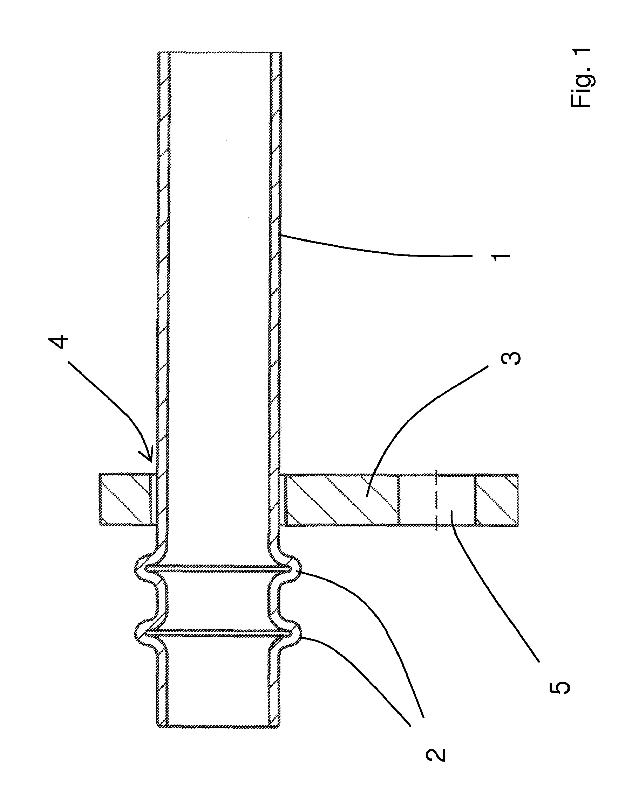

Der in Figur 1 gezeigte Abschnitt einer Rohrleitung 1 weist an seinem ersten Ende zwei axial beabstandete Bunde 2 zur Befestigung und Abdichtung an beispielsweise einem Motor oder Getriebe auf. Vom gegenüber liegendem zweiten Ende des Rohrleitungsabschnitts 1 ist eine Halterung 3 mit einer ersten Bohrung 4 zur Aufnahme des Rohrleitungsabschnitts 1 und einer zweiten Bohrung 5 zur Befestigung der Halterung 3 an einem nicht gezeigten Gegenstand aufgeschoben. Der Durchmesser der Bohrung 4 ist geringfügig größer als der Außendurchmesser des Rohrleitungsabschnitts 1.

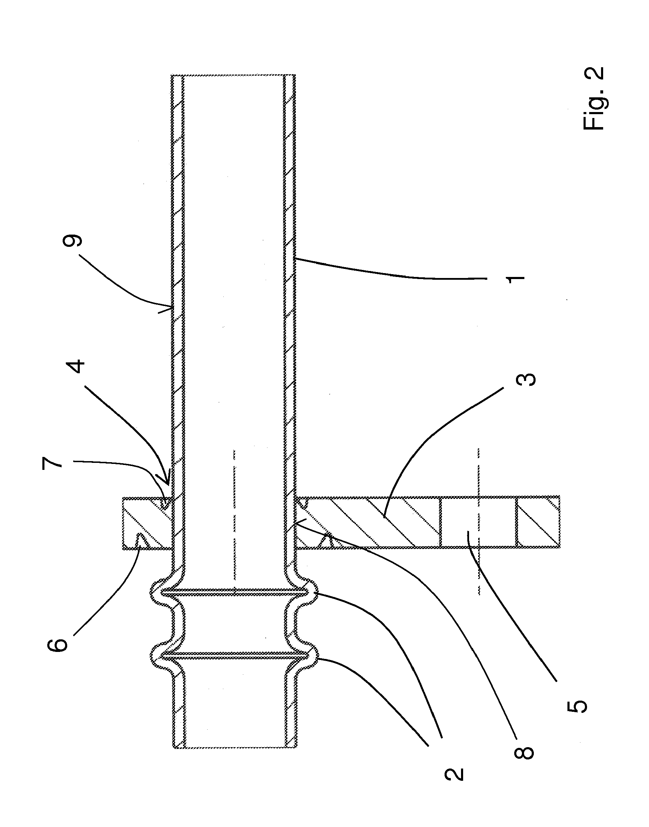

Durch ringförmige, hier nicht gezeigte Umformwerkzeuge sind in Figur 2 gezeigte, zur Bohrung 4 der Halterung 3 konzentrisch angeordnete, im Längsschnitt keilförmige Ringsicken 6 und 7 in die Halterung 3 eingeprägt. Die Ringsicke 6 ist auf der den Bunden 2 des Rohrleitungsabschnitts 1 zugeordneten Seite der Halterung 3 angeordnet und weist einen größeren Durchmesser auf, als die Ringsicke 7, da das nicht gezeigte, die Ringsicke 6 erzeugende Umformwerkzeug über die Befestigungsbunde 2 des Rohrleitungsabschnitts 1 schiebbar sein muss.

Die Keilform der Ringsicken 6 und 7 bewirkt, dass der ursprünglich an der Stelle der Sicken 6 und 7 befindliche Werkstoff in Richtung auf die Bohrung 4 verdrängt ist. Durch diese Verdrängung ist der ursprüngliche Durchmesser der Bohrung 4 verkleinert, so dass nunmehr die Innenfläche 8 der Bohrung 4 auf die Außenfläche 9 des Rohrleitungsabschnitts 1 gepresst ist. Die dadurch herrschende Flächenpressung sorgt für eine drehfeste axial unverschiebbare Fixierung der Halterung 3 auf dem Rohrleitungsabschnitt 1.

### Bezugszeichenliste

### (Teil der Beschreibung)

- 1: Rohrleitungsabschnitt
- 2: Bunde
- 3: Halterung
- 4: erste Bohrung der Halterung 3
- 5: zweite Bohrung der Halterung 3
- 6: Ringsicke
- 7: Ringsicke
- 8: Innenfläche der Bohrung 4
- 9: Außenfläche des Rohrleitungsabschnitts 1

## Patentansprüche

1. Halterung (3) für eine Rohrleitung (1), die drehfest und axial unverschiebbar auf der Rohrleitung (1) angeordnet ist,
**dadurch gekennzeichnet, dass** die Halterung (3) mindestens eine der Querschnittsform der Rohrleitung (1) angepasste Bohrung (4) aufweist, die Rohrleitung (1) durch die Bohrung (4) der Halterung (3) hindurch verläuft und der Durchmesser der Bohrung (4) durch eine plastische Verformung der Halterung (3) derartig reduziert ist, dass die Rohrleitung (1) unlösbar, drehfest und axial unverschiebbar in der Bohrung (4) der Halterung (3) fixiert ist.

2. Halterung (3) nach Anspruch 1, **dadurch gekennzeichnet, dass** die plastische Verformung mindestens eine um die Bohrung (4) der Halterung (3) angeordnete, durch auf die Halterung (3) einwirkenden axialen Druck spanlos erzeugte Ringnut (6) gebildet ist.

3. Halterung (3) nach Anspruch 1, **dadurch gekennzeichnet, dass** die plastische Verformung durch zwei jeweils auf axial gegenüberliegenden Seiten der Halterung (3) um die Bohrung (4) der Halterung (3) herum angeordnete, spanlos erzeugte Ringnuten (6, 7) mit unterschiedlichen Durchmessern gebildet ist.

4. Halterung (3) nach Anspruch 2 oder 3, **dadurch gekennzeichnet, dass** die eine Ringnut (6) im Längsschnitt eine Keilform aufweist oder beide Ringnuten (6, 7) im Längsschnitt eine Keilform aufweisen.

5. Halterung (3) nach mindestens einem der vorhergehenden Ansprüche, **dadurch gekennzeichnet, dass** die innere Oberfläche (8) der Bohrung (4) der Halterung (3) eine Verzahnung aufweist.
